Europäisches Patentamt

European Patent Office

Office européen des brevets

(11) Veröffentlichungsnummer: **0 120 329**
**B1**

(12) **EUROPÄISCHE PATENTSCHRIFT**

(45) Veröffentlichungstag der Patentschrift:
**11.05.88**

(21) Anmeldenummer: **84102082.9**

(22) Anmeldetag: **29.02.84**

(51) Int. Cl.⁴: **G 02 B 26/10,** G 01 S 11/00,
G 01 S 17/46, G 01 B 11/26,
G 01 B 11/275

(54) **Strahlablenksystem.**

(30) Priorität: **25.03.83 DE 3310875**

(43) Veröffentlichungstag der Anmeldung:
**03.10.84 Patentblatt 84/40**

(45) Bekanntmachung des Hinweises auf die Patenterteilung:
**11.05.88 Patentblatt 88/19**

(84) Benannte Vertragsstaaten:
**CH DE FR GB LI**

(56) Entgegenhaltungen:
**FR - A - 2 223 711**
**FR - A - 2 339 179**
**FR - A - 2 359 556**
**FR - A - 2 452 724**
**GB - A - 2 120 804**
**US - A - 2 975 668**
**US - A - 3 516 722**
**US - A - 3 659 142**
**US - A - 3 994 580**
**US - A - 4 270 862**

(73) Patentinhaber: **ROBERT BOSCH GMBH, Postfach 50,
D-7000 Stuttgart 1 (DE)**

(72) Erfinder: **Adolph, Dietrich, Dipl.-Phys., Im
Wetterkreuz 12, D-7321 Albershausen (DE)**

## Beschreibung

Die Erfindung geht aus von einem Strahlablenksystem nach der Gattung des unabhängigen Patentanspruchs. Aus der Zeitschrift Spectrum der Wissenschaft, März 1981, Seite 117 ist es bereits bekannt, mittels dreier rotierender Spiegel, die an Motorwellen angebracht sind, Kreise, Ellipsen oder Quadrate mit einem Laserstrahl auf die Leinwand zu zeichnen. Aufgrund der nicht präzisen Lagerung der Spiegel und des Freilaufes der Motoren ist diese Anordnung nicht für eine definitive und reproduzierbare Strahlabtastung geeignet.

Andere bekannte Strahlablenksysteme arbeiten mit Schwenkspiegeln, die teilweise um zwei Achsen schwenkbar sind. Bei Schwenkspiegelsystemen sind aufwendige Mechaniken erforderlich, die die Schwingbewegung erzeugen. Weiterhin weisen diese Abtastsysteme eine niedrige Grenzfrequenz auf, da bei jeder Schwingung die träge Masse des Spiegels von neuem zu beschleunigen ist. Ferner ist die Strahlablenkung nicht gleichförmig.

Weiterhin ist es aus der US-A-3 516 722 bekannt, Strahlablenksysteme zu schaffen, die zwei um jeweils eine Rotationsachse taumelnde ebene Spiegel aufweisen. Die Spiegel rotieren dabei in entgegengesetzte Richtungen und haben die gleiche Geschwindigkeit. Hierdurch wird es möglich, eine sinusförmige Ablenkung des Strahls zu erreichen.

Das erfindungsgemässe Strahlablenksystem mit den kennzeichnenden Merkmalen des unabhängigen Patentanspruchs hat demgegenüber den Vorteil, dass eine einfache Fertigung und eine sichere Lagerung der Spiegel möglich ist. Weiterhin ist vorteilhaft, dass Drehbewegungen einfach zu erzeugen sind und der Aufbau auf wenige mechanische Teile beschränkt ist. Als weiterer Vorteil ist anzusehen, dass die Auswertung der Signale des Strahlablenksystems unabhängig von mechanischen Grössen rein elektronisch erfolgt. Als weiterer Vorteil ist anzusehen, dass durch geeignete Wahl des Drehzahlverhältnisses und der Drehrichtung der beiden Motoren unterschiedliche Abtastmuster erzeugt werden. Hierdurch ist die Abtastdichte in den verschiedenen Bereichen unterschiedlich wählbar.

Durch die in den abhängigen Patentansprüchen aufgeführten Massnahmen sind vorteilhafte Weiterbildungen und Verbesserungen des im unabhängigen Anspruch angegebenen Strahlablenksystems möglich. Durch die Ausbildung der Spiegelkörper als Zylinder ist einerseits eine leichte, definierte Befestigung der Spiegel auf der Welle der Motoren möglich und andererseits die Motor-Spiegel-Anordnung leicht auswuchtbar. Zum Erzielen guter optischer Eigenschaften ist es zweckmässig, wenn die zu empfangenden oder zu sendenden Strahlen im spitzen Winkel, möglichst jedoch senkrecht auf die Spiegel auftreffen. Durch die dynamische Auswuchtung der Motoren mit den aufgesetzten Spiegeln wird einmal ein ruhiger Lauf des Strahlablenksystems erreicht und man erhält einen gleichmässig bewegten Taststrahl.

Wird für das Strahlablenksystem ein Sender benötigt, so eignet sich hierfür insbesondere ein Laser, da dessen Licht besonders einfach zu bündeln ist. Soll das Strahlablenksystem mit Sender und Empfänger betrieben werden, ist es vorteilhaft, zwischen Sender und Strahlablenksystem einen halbdurchlässigen Spiegel anzubringen und im weiteren Strahlenweg den Empfänger anzuordnen. Dadurch ergibt sich ein besonders kompakter Aufbau des gesamten Strahlablenksystems. Zur Auswertung der gewonnenen Ergebnisse ist es günstig, wenn durch den Empfänger gesteuerte Zählvorrichtungen abfragbar sind, die Informationen über die Drehwinkel-Stellung der Spiegel auf den Motorachsen enthalten. Mittels einfacher Rechenschritte ist es dann möglich, Informationen über den Ort des zu messenden Objekts zu erhalten. Zur Erzielung eines synchronisierten Laufes der beiden Motoren ist es günstig, die Motoren durch einen gemeinsamen Taktgenerator zu betreiben, dessen Frequenz jeweils einem Teiler zugeführt ist, dessen Ausgangssignale die Motorregelungen steuern. Dadurch ist eine besonders einfache Steuerung des Strahlenablenksystems gegeben. Zur Beseitigung eines eventuell störenden Ablenk-Offsets ist es günstig, zwischen dem ersten Spiegel und dem zweiten Spiegel im Strahlengang Sammellinsen anzuordnen. Dadurch wird der Offset unterdrückt. Insbesondere zur Verfolgung strahlender Objekte ist es günstig, das Strahlablenksystem mittels Verstellmotoren um zwei Achsen verschwenkbar auszugestalten. Die Verstellung erfolgt dabei in Abhängigkeit von der Lage des strahlenden Objekts. Dadurch ist es möglich, in einem weiten Winkelbereich strahlende Objekte zu erfassen und die Lage ihres Ortes in Bezug zum Strahlablenksystem festzustellen. Werden hierzu drei Empfänger vorgesehen, deren Lage zueinander bekannt ist, so sind nicht nur die räumlichen Winkel sondern auch der Abstand dieses Objektes erfassbar. Die Strahlablenksysteme sind besonders vorteilhaft zur Vermessung von Spur und Sturz eines Fahrzeuges und zur Bestimmung von Abstand und Richtung eines strahlenden Objektes geeignet.

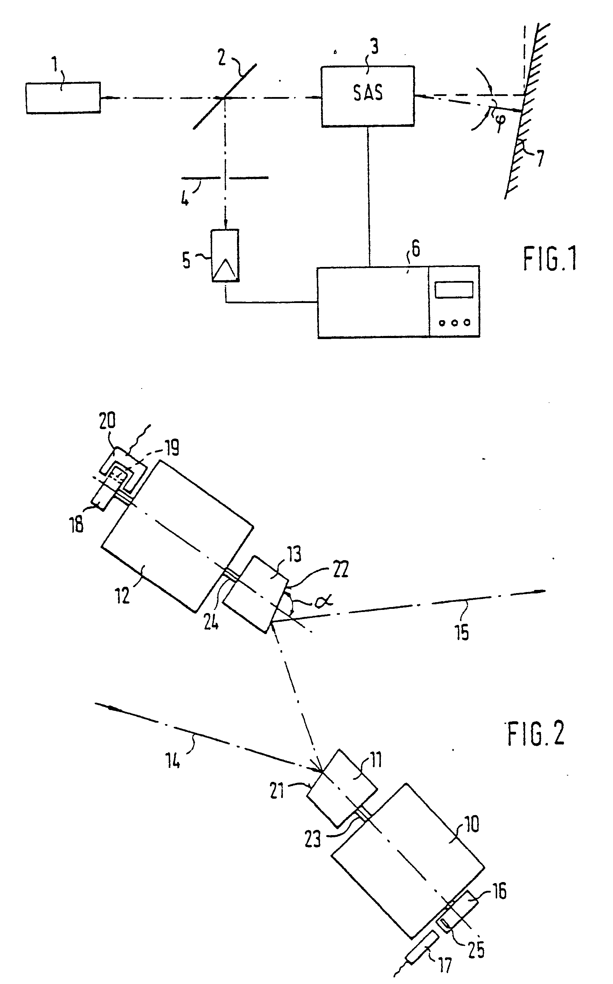

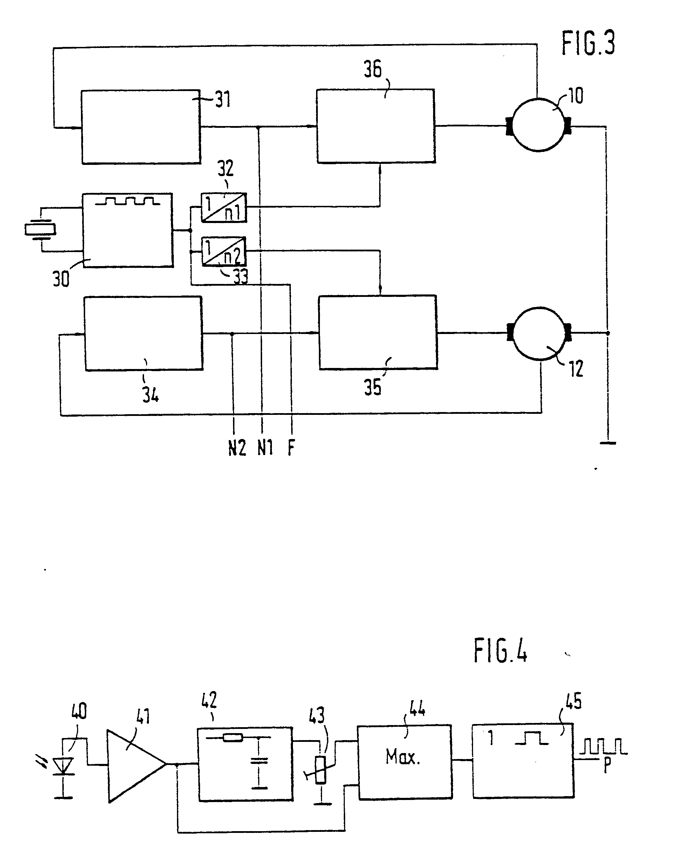

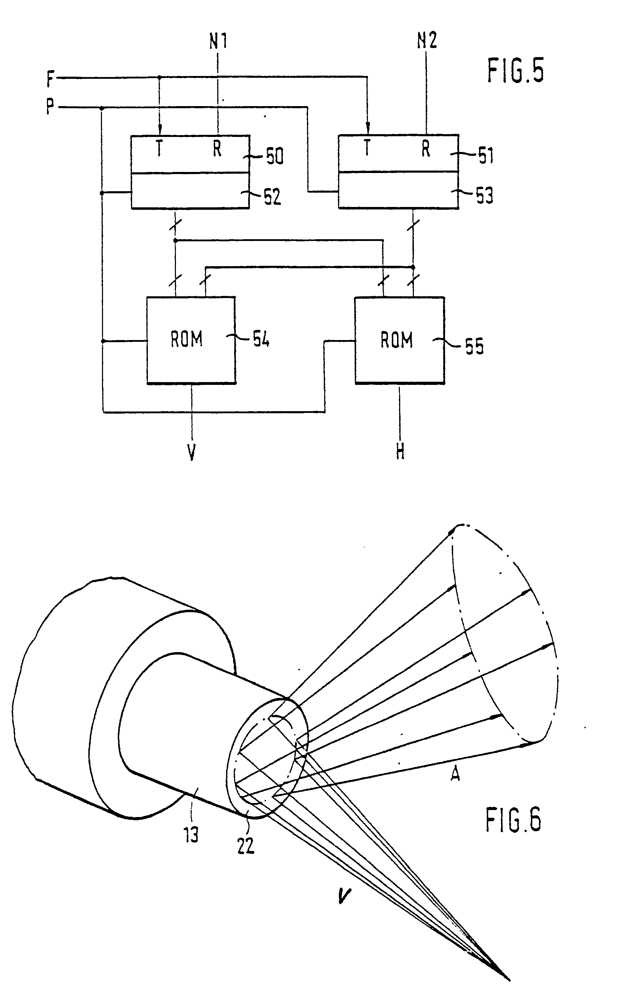

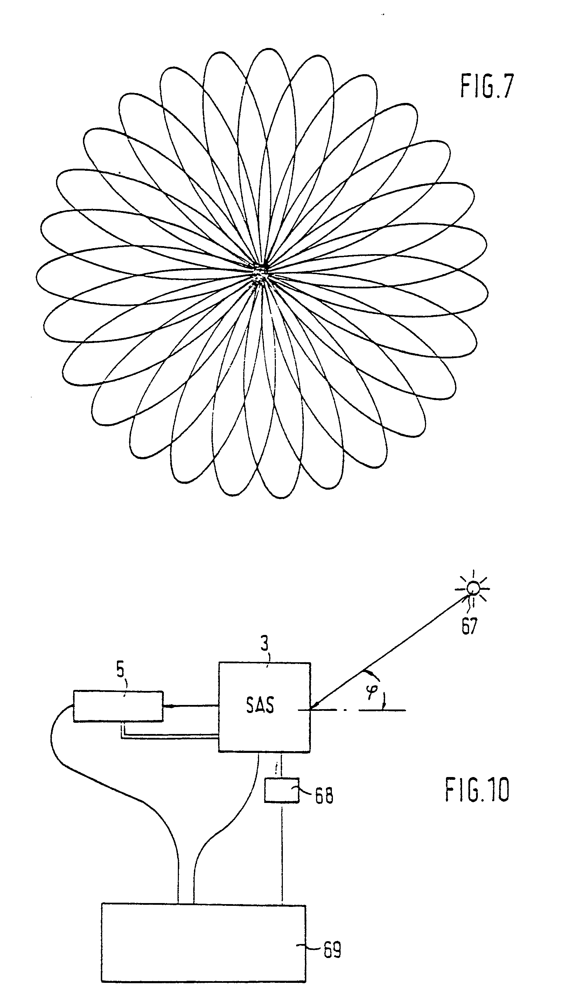

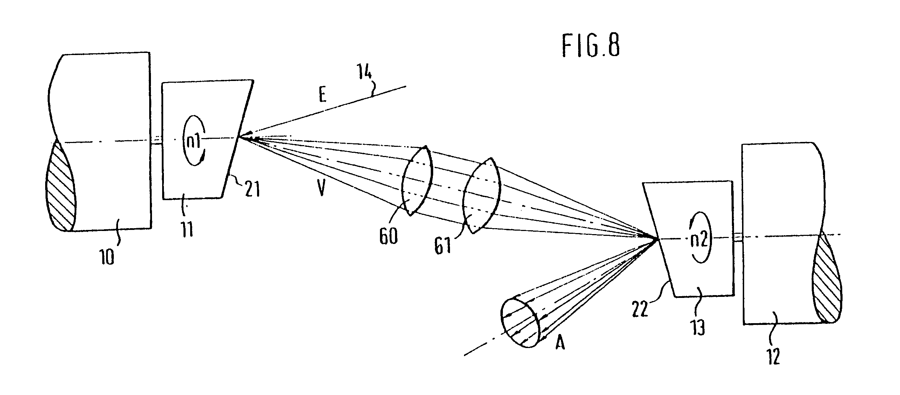

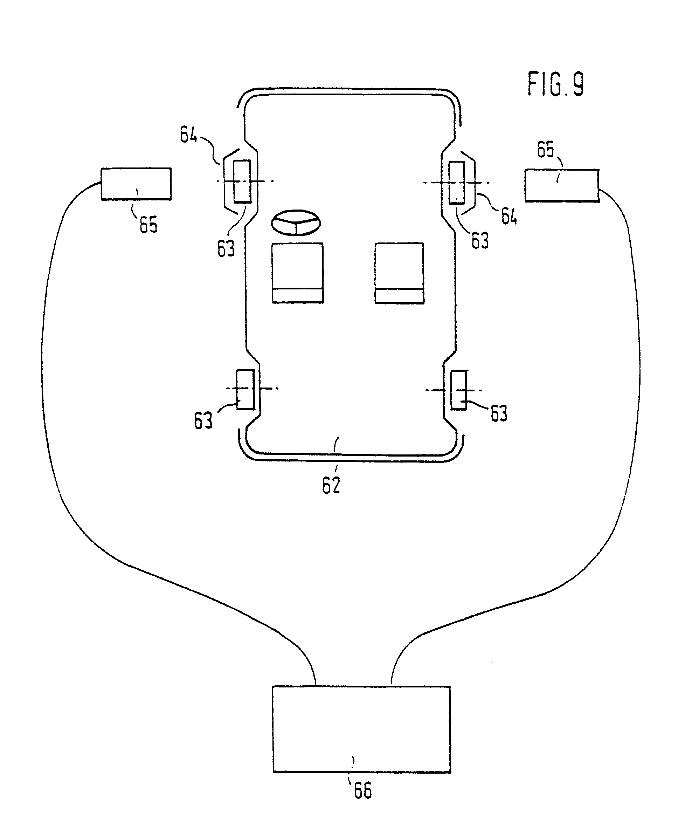

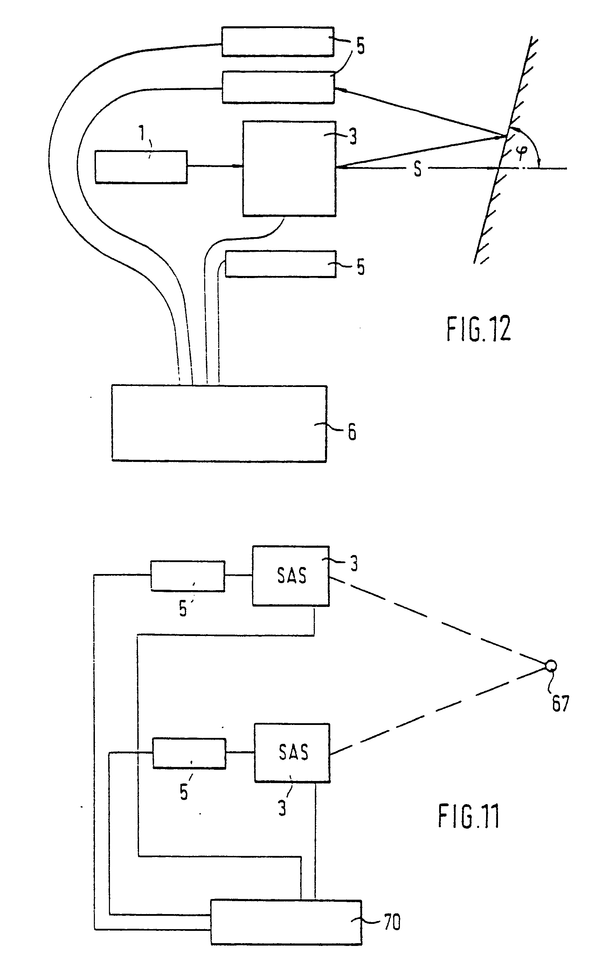

Ausführungsbeispiele der Erfindung sind in der Zeichnung dargestellt und in der nachfolgenden Beschreibung näher erläutert. Es zeigen Figur 1 den prinzipiellen Aufbau eines Abtastsystems, Figur 2 den Aufbau des Strahlablenksystems, Figur 3 die Steuerungselektronik für die Motoren des Strahlablenksystems, Figur 4 ein Blockschaltbild des Aufbaus eines Empfängers, Figur 5 als Blockschaltbild eine einfache Auswerteschaltung, Figur 6 das Verhalten des Strahls am zweiten Spiegel, Figur 7 eine Abtastrosette, Figur 8 ein Strahlablenksystem mit eingeschobenen Linsen, Figur 9 ein Anwendungsbeispiel des Abtastsystems nach Figur 1 für die Ermittlung von Spur und Sturz eines Kraftfahrzeuges, Figur 10 ein Ausführungsbeispiel zur Verwendung des Strahlablenksystems zur Objektverfolgung, Figur 11 ein Ausführungsbeispiel zur Ortung eines Objektes im Raum und Figur 12 ein weiteres Ausführungsbeispiel zur Ortung eines Objektes im Raum.

Die Figur 1 zeigt ein Abtastsystem, das zur Winkelbestimmung von reflektierenden Flächen geeignet ist. Ein Laserstrahlgenerator 1 sendet seinen Strahl durch einen halbdurchlässigen Spiegel 2 auf das Strahlablenksystem (SAS) 3, von dessen Ausgang der abgelenkte Strahl auf eine reflektierende Fläche 7 geworfen wird. Die reflektierende Fläche 7 ist zur Senkrechten des Strahlablenksystems 3 um den Winkel φ geneigt. Aufgrund der Eigenart des Strahlablenksystems 3 bestreicht der austretende Strahl jeden Punkt der reflektierenden Fläche nach einem bestimmten System.

Erreicht der Strahl die Stellung, in der er senkrecht auf die reflektierende Fläche 7 trifft, durchläuft der reflektierte Strahl das Strahlablenksystem 3 in umgekehrter Richtung. Er wird am halbdurchlässigen Spiegel 2 abgelenkt und trifft nach einer Blende 4 auf einen Empfänger 5. Der Empfänger 5 gibt ein Signal an die Auswerteelektronik 6. Dort wird in einem Rechner die Information über die Winkelstellung der Motoren des Strahlablenksystems 3 ausgewertet und der Raumwinkel berechnet und zur Anzeige gebracht.

Einzelheiten des Strahlablenksystems 3 sind in Figur 2 dargestellt. Das Strahlablenksystem umfasst im wesentlichen zwei Motoren 10 und 12, auf deren Wellen 23, 24 zylindrische Spiegelkörper 11 und 13 fest angebracht sind. Die Spiegeloberflächen 21 und 22 der zylindrischen Spiegelkörper 11 und 13 sind angeschrägt, so dass die Spiegelnormalen um jeweils einen Winkel α zu den Drehachsen der Wellen 23 und 24 geneigt sind. Der Winkel α wird als Taumelwinkel bezeichnet und ist bei beiden Spiegeln gleich. Die Motoren 10 und 12 sind beispielsweise als Gleichstrommotoren ausgebildet. Zur Drehzahlregulierung und als Information für die Auswerteelektronik wird an jedem Motor die Drehzahl und die Phasenlage gemessen. Beim Motor 12 erfolgt die Messung der Drehzahl und der Phasenlage mittels einer Gabellichtschranke 20, in die eine Blende 18 hineinragt, die mit der Welle 24 fest verbunden ist. Die Blende 18 weist eine Bohrung 19 auf, so dass durch die Gabellichtschranke 20 ein Impuls abgegeben wird, wenn die Bohrung 19 die Gabellichtschranke passiert.

Beim Motor 10 erfolgt die Drehwinkelerfassung mittels einer Reflexlichtschranke 17, die auf eine Markierung 25 anspricht, die auf einer Scheibe 16 angebracht ist, die mit der Welle 23 des Motors ortsfest verbunden ist.

Die Anordnung der Motoren ist fast beliebig. Für beste optische Eigenschaften ist es vorteilhaft, wenn die Strahlen, z.B. der einfallende Strahl 14, möglichst senkrecht auf die reflektierenden Spiegelflächen 21 und 22 der beiden Spiegelkörper 11 und 13 auftreffen. Der austretende Strahl ist in diesem Fall mit 15 bezeichnet. Um einen ruhigen Lauf des Strahlablenksystems und damit einen gleichmässig bewegten Taststrahl zu erreichen, ist es notwendig, dass jeder Motor mit seinem festaufgesetzten Spiegel und eventuellen weiteren Zusatzmassen dynamisch in zwei Ebenen ausgewuchtet ist. Weiterhin ist es notwendig, dass der Taumelwinkel α beider Spiegel gleich ist, damit der Abtaststrahl alle Punkte eines Bereiches erfasst.

Ein Ausführungsbeispiel der Motorregelung des Strahlablenksystems nach Figur 2 ist in Figur 3 näher dargestellt. Es ist ein quarzgesteuerter Taktgenerator 30 vorgesehen, dessen Ausgangssignal sowohl einem Teiler 32 als auch einem Teiler 33 zugeführt ist. Die Teilerverhältnisse des Teilers 32 und des Teilers 33 sind unterschiedlich. Das Ausgangssignal des Teilers 32 wird als Sollwert einer an sich bekannten Motorregelung 36 zugeführt. Durch die Motorregelung 36 wird der Motor 10 des Strahlablenksystems gesteuert. Vom Motor 10 wird ein Signal zur Drehzahlerfassung abgegriffen, das der Drehzahlauswertestufe 31 zugeführt ist. Hierzu eignet sich beispielsweise eine Verstärkerschaltung, an deren Eingang die zuvor beschriebenen Lichtschranken angeschlossen sind. Die Drehzahlimpulse N1 des Motors 10 sind nach aussen geführt. Der Ausgang des Teilers 33 ist als Sollwert einer Drehzahlregelung 35 zugeführt, durch deren Ausgangssignal die Drehzahl des Motors 12 bestimmt ist. Vom Motor 12 wird ebenfalls eine Drehzahlinformation der Drehzahlauswerteschaltung 34 zugeführt. Das dort abgegebene Signal N2 steht wie das Signal N1 als Drehzahlinformation und als Istwert für die Regelvorrichtung 35 zur Verfügung. Weiterhin ist das Ausgangssignal des Taktgenerators 30 als Referenzfrequenz F nach aussen geführt.

Die Teiler 32 und 33 teilen das Taktsignal so, dass sich an den Motoren 10 und 12 ein Drehzahlverhältnis einstellt, das gleich dem Verhältnis zweier teilerfremder ganzer Zahlen ist. Ist das Drehzahlverhältnis festgelegt, so wird die Referenzfrequenz entsprechend dem gewählten Drehzahlverhältnis geteilt. Beträgt die Referenzfrequenz beispielsweise 125 kHz und ist ein Drehzahlverhältnis von 1:1,105 erwünscht, so ist es beispielsweise günstig, mit dem Teiler 32 durch 1000 und mit dem Teiler 33 durch 1105 zu teilen.

Die Regelungen 35 und 36 vergleichen laufend die von der Referenzfrequenz gewonnenen, geteilten Frequenzen mit den erfassten Drehzahlen und regeln so lange nach, bis Phasenstarrheit zur geteilten Referenzfrequenz und somit auch indirekt über die Referenzfrequenz zwischen den beiden Motoren herrscht.

Figur 4 zeigt eine einfache Auswerteschaltung, wie sie beim Empfänger 5 Verwendung findet. Zur Aufnahme des Laserstrahls dient eine Fotodiode 40 oder ein anderes für die jeweils verwendete Strahlung empfindliches Bauelement. Das von der Fotodiode 40 aufgenommene Signal wird durch einen Verstärker 41 verstärkt. Die anschliessende Spitzenwerthalteschaltung 42 speichert die maximal verstärkte Signalamplitude. Weiterhin ist das Ausgangssignal einer Maximumerkennungsschaltung 44 zugeführt. Der Ausgang der Spitzenwerthalteschaltung 42 ist zu einem Potentiometer 43 geführt, an dessen Abgriff ein weiteres Signal für die Maximumerkennungsschaltung 44 abgegriffen wird. Dieses Signal sorgt dafür, dass nur Signale der Fotodiode oberhalb einer fest einstellbaren Amplitudenhöhe von der Maximumerkennungsschaltung 44 ausgewertet werden. Da diese Schwelle immer auf den Spitzenwert bezogen wird, werden alterungsbedingte Änderungen der Eigenschaften der Fotodiode und Helligkeitsschwankungen der Lichtquelle eliminiert. Die Abklingzeitkonstante der Spitzenwerthalteschaltung 42 wird daher zweckmässigerweise so gewählt, dass sich der Spitzenwert langsam ändernden Signalamplituden anpassen kann.

Die Maximumerkennungsschaltung 44 erfasst den Zeitpunkt, an dem ein Signal, dessen Amplitude grösser als die eingestellte Schwelle ist, sein Maximum erreicht. Dies kann beispielsweise durch einfache Differentiation erkannt werden. Mit diesem Signal wird ein Monoflop 45 angesteuert, wobei die positive Flanke des erzeugten Monoflopimpulses dem Zeitpunkt des Maximums entspricht. Dieser Puls P steht am Ausgang der Empfängerschaltung für die Auswerteelektronik zur Verfügung.

In Figur 5 ist ein einfaches Ausführungsbeispiel einer Auswerteschaltung gezeigt. Die vom Ausgang des Taktgenerators abgeleitete Referenzfrequenz F ist dem Takteingang von Zählern 50 und 51 zugeführt. Der Zähler 50 erhält einen Rücksetzimpuls vom Drehzahlsignal N1, das von der Drehzahlausverteschaltung 31 abgeleitet ist. Der Zähler 51 erhält seinen Rücksetzimpuls vom Drehzahlsignal N2, das von der Drehzahlausverteschaltung 34 abgeleitet ist. An den Zähler 50 ist ein Pufferspeicher 52 angeschlossen. An den Zähler 51 schliesst sich ein Pufferspeicher 53 an. Den Pufferspeichern 52 und 53 ist mittels Leitungen das Pulssignal P zugeführt, das von einem Empfänger nach Figur 4 abgegeben wird. Die Ausgänge der Pufferspeicher 52 und 53 sind jeweils einem ROM 54 und 55 zugeführt. Die ROMs 54 und 55 werden ebenfalls durch den Puls P aktiviert. Am Ausgang des ROM 54 ist der Vertikalwinkel V und am Ausgang des ROM 55 der Horizontalwinkel H abgreifbar. Diese beiden Werte sind beispielsweise durch digitale Anzeigevorrichtungen anzeigbar oder können zur Weiterverarbeitung dienen.

Die beiden Zähler 50 und 51, die als Binärzähler ausgebildet sind, werden durch die Referenzfrequenz F getaktet und hochgezählt. Nach jeweils einer Motorumdrehung des entsprechenden Motors des Strahlablenksystems werden sie durch den entsprechenden Drehzahlimpuls zurückgesetzt. Tritt nun ein Puls P auf, der vom Empfänger des Abtastsystems abgegeben wird, werden die augenblicklich vorhandenen Zählerstände in den Speichern 52 und 53 zwischengespeichert. Die zwischengespeicherten Zählerstände geben die Lage der Drehspiegel bezüglich einer Umdrehung an.

Die in den Speichern 52 und 53 gespeicherten digitalen Zählerstände werden zu zwei entsprechend breiten Adressbussen zusammengeführt. Ein Adressbus adressiert entweder ROM 54 oder ROM 55, die auf ihrem Datenbus den Vertikalwinkel V und den Horizontalwinkel H ausgeben. Der Raumwinkel der in Figur 1 dargestellten Fläche ist daher eindeutig bestimmt.

In den ROMs 54 und 55 ist jeder Adresse ein Datenwort zugeordnet. Diesem wiederum entspricht einmal der Vertikal- und im anderen Fall der Horizontalwinkel. Diese Zuordnung wird im wesentlichen empirisch bestimmt und ist abhängig von der Nullage der Motoren, die wiederum durch die Abschrägung der Spiegeloberfläche im Verhältnis zur Drehzahlmarke bestimmt ist. Ist diese Nullage ermittelt, so sind die in den ROMS 54 und 55 abzuspeichernden Werte in Abhängigkeit vom Zählerstand leicht empirisch festzulegen.

Die Figur 6 zeigt detailliert das Verhalten des Laserstrahls am zweiten Spiegel 22. Der in Figur 2 gezeigte einfallende Strahl 14 trifft zuerst auf den Spiegel 21. Da dieser Spiegel eine gewisse Neigung, den Taumelwinkel, aufweist, dreht sich die Spiegelnormale um die Motorachse. Da der einfallende Lichtstrahl 14 raumfest ist, erscheint es einem Beobachter, als bilde der ausfallende Lichtstrahl V einen Kegel mit der Spitze im Auftreffpunkt der Spiegelfläche 21, wenn der Spiegel 21 schnell genug rotiert. Der Öffnungswinkel des Strahlenkegels ist dabei das Vierfache des Taumelwinkels. Dieser örtlich veränderliche Strahl gelangt nun auf die Spiegelfläche 22. Da auch diese Spiegelfläche einen Taumelwinkel aufweist, dreht sich auch hier die Spiegelnormale um die Motorachse. Der austretende Strahl A ist nunmehr der am zweiten Spiegel reflektierte Strahl V. Da der Taumelwinkel konstruktiv bedingt ist und daher konstant ist, ist der austretende Strahl A nur vom jeweiligen Drehwinkel der beiden Motoren 10 und 12 abhängig.

Der einfallende Strahl V beschreibt auf der Spiegeloberfläche 22 allgemein eine schiefwinklige Projektion eines Kegels, eine Ellipse. Dadurch treffen die einzelnen Strahlen nicht im Mittelpunkt auf.

Dies bedeutet, dass der austretende Strahl A nicht aus einem Punkt erzeugt wird, wie dies auch beim Strahl V der Fall war, sondern unendlich viele Ursprungspunkte besitzt, die auf einer Ellipse liegen. Diese Erscheinung wird als Lage-Offset bezeichnet. Soll das Strahlablenksystem nur zur Winkelmessung verwendet werden, ist der Offset unerheblich, da die Winkel der austretenden Strahlen nur von dem Neigungswinkel der Spiegelfläche 22 und dem Drehwinkel des entsprechenden Motors abhängen, jedoch nicht von ihrem Ursprung abhängig sind.

Wird der so entstehende Ausgangsstrahl A auf eine Ebene projiziert, so entsteht ein Bild, dessen Form vom Verhältnis der Drehzahlen sowie der relativen Drehrichtung der beiden Motoren abhängt. Ein Beispiel hierzu ist in Figur 7 dargestellt. Bei dem gezeigten Beispiel haben die Motoren ein Drehzahlverhältnis von −1:1.7. D.h., dass die Motoren 10 und 12 gegensinnig drehen und der Motor 12 1.7 mal schneller läuft als der Motor 10. Von dem Drehzahlverhältnis hängt die Laufzeit ab, die für die Periodizität der Gesamtfigur massgebend ist. Grundsätzlich lässt sich sagen, dass die Laufzeit umso länger ist, je geringer der Drehzahlunterschied der beiden Motoren untereinander ist. Um überhaupt Periodizität zu erhalten, muss das Drehzahlverhältnis n1:n2 gleich dem Verhältnis zweier teilerfremder ganzer Zahlen sein. Das Drehzahlverhältnis ist auch massgebend für die Abtastdichte. Je näher das Drehzahlverhältnis an 1 herankommt, desto höher ist die Abtastdichte. Durch die Drehrichtung ist das Auflösungsverhalten zu beeinflussen. Eine grössere Auflösung in der Mitte erhält man, wenn die Drehrichtungen der beiden Motoren entgegengesetzt ist, während eine gleiche Drehrichtung der beiden Motoren zu einer grösseren Auflösung am Rande des Abtastbereiches führt.

Während der zuvor erwähnte Offset bei der reinen Winkelmessung unerheblich ist, ist er störend, wenn das Strahlablenksystem als Nachführsystem oder zur Entfernungsmessung verwendet werden soll. In diesem Fall muss der Offset beseitigt werden. Entsprechend Figur 8 lässt sich dies am einfachsten mit Hilfe eines Linsensystemes bewerkstelligen. Der einfallende Strahl 14 gelangt auf einen Spiegel 21, der auf dem Zylinder 11 aufgesetzt ist. Der Zylinder 11 wird durch den Motor 10 über eine Welle angetrieben. Der austretende Strahl V dieses Systems gelangt zu einer Sammellinse 60 und einer Fokussierlinse 61, die so ausgerichtet sind, dass der Strahl V auf den Mittelpunkt der Spiegeloberfläche 22 fällt, die auf den Zylinder 13 aufgebracht ist. Der Zylinder 13 wird durch den Motor 12 über eine Welle angetrieben. Der austretende Strahl A wird nunmehr aus einem Punkt erzeugt und weist daher keinen Offset auf.

Die Figuren 9 bis 12 zeigen Anwendungsbeispiele der Erfindung. In Figur 9 dient das Strahlablenksystem für ein Achsmessgerät. Bei einem Fahrzeug 62 mit Rädern 63 soll die Spur und der Sturz bestimmt werden. Hierzu werden auf den Rädern einer Achse Spiegel 64 montiert. Weiterhin sind zwei Abtastsysteme 65, die entsprechend Figur 1 aufgebaut sind, vorgesehen. Von den Abtastsystemen 65 führen Leitungen zu einer Auswerteschaltung 66.

Zuerst erfolgt die Ausrichtung der Abtastsysteme 65 ohne dazwischen stehendes Fahrzeug. Abwechselnd wird je ein Abtastsystem nur als Sender und das andere nur als Empfänger betrieben. So lässt sich mit Hilfe der Auswerteelektronik 66 die genaue Position beider Geräte zueinander erkennen. Diese Werte dienen als Bezugsgrösse. Zur Messung wird das Fahrzeug zwischen die Abtastsysteme 65 gefahren. Mittels der Auswerteelektronik ist es nunmehr möglich, zu erkennen, mit welchen Abweichungen gegenüber der Drehachse des Rades 63 die Reflektoren 64 montiert sind. Dazu ist es erforderlich, die Spiegelstellung bei mindestens drei Radwinkelstellungen zu vermessen, da dann die Dreh- gleich Radachse eindeutig bestimmt ist. Diese Werte werden gespeichert und bei der anschliessenden Achsvermessung berücksichtigt. Dadurch ist ein schnelles Messen ohne zeitraubende Justierarbeit möglich.

Das Anwendungsbeispiel nach Figur 10 zeigt die Verwendung des Strahlablenksystems als Nachführsystem. Das Strahlablenksystem 3 ist hierbei auf einer räumlich verschwenkbaren, durch Motoren antreibbaren Anordnung 68 gelagert. Mit dem Strahlablenksystem ist ein Empfänger 5 ortsfest verbunden. Zu einer Auswerteschaltung 69 werden die Empfangsimpulse des Empfängers 5 und die Impulse die die Phasenlage der Motoren signalisieren geführt. Durch die Auswerteschaltung werden die Motoren des Strahlablenksystems 3 sowie die Motoren der Schwenkvorrichtung 68 in Abhängigkeit von der Lage eines strahlenden Objektes 67 gesteuert.

Der Strahl des strahlenden Objektes 67 fällt unter einem messbaren Winkel in das Strahlablenksystem 3 ein und wird bei einer bestimmten Stellung der Motoren 10 und 12 des Strahlablenksystemes 3 vom Empfänger 5 detektiert.

Aufgrund der Winkelstellung der Motoren des Strahlablenksystems zum Detektionszeitpunkt sind die Raumwinkel des strahlenden Objektes 67 eindeutig bestimmbar. Diese Winkelangaben werden der Steuervorrichtung der Schwenkvorrichtung 68 zugeführt, so dass das Strahlablenksystem dem strahlenden Objekt nachführbar ist. Da in diesem Falle üblicherweise das strahlende Objekt im Mittelpunkt des Strahlablenksystemes gehalten werden soll, ist es vorteilhaft, wenn die Motoren des Strahlablenksystems gegenläufig drehen.

In Figur 11 ist eine Anordnung gezeigt, mit der es möglich ist, den Abstand und die Richtung eines punktförmigen strahlenden Objektes 67 zu ermitteln. Hierzu sind mindestens zwei Strahlablenksysteme 3 vorgesehen, denen jeweils ein Empfänger 5 nachgeschaltet ist. Die Signale der Empfänger 5 werden einer Auswerteschaltung zugeführt. Von der Auswerteschaltung 70 werden in bekannter Weise die Strahlablenksysteme 3 gesteuert. Der Abstand der Strahlablenksysteme 3 untereinander ist bekannt und steht der Auswerteschaltung zur Verfügung. Sowohl vom ersten Strahlablenksystem 3 als auch vom zweiten Strahlablenksystem 3 ist nunmehr eine Richtung bestimmt, unter der das strahlende Objekt 67 jeweils geortet wird. Nach den an sich bekannten Methoden der Trigonomie sind aus den Winkelwerten der beiden Strahlablenksysteme und der bekannten Entfernung neben den Richtungen des strahlenden Objekts auch dessen Abstände von den Strahlablenksystemen bestimmbar.

Eine weitere Möglichhkeit zur Bestimmung des Abstandes und des Winkels eines strahlenden Objektes ist in Figur 12 aufgezeigt. Mit der Anordnung nach Figur 12 soll der Winkel und der Abstand einer reflektierenden Fläche im Bezug zum Strahlablenksystem 3 ermittelt werden. Zu diesem Zweck sind drei Empfänger 5 vorhanden, deren Abstand untereinander und zum Strahlablenksystem definiert ist. Ein Sender 1 sendet einen Strahl aus, der durch das Strahlablenksystem 3 variiert wird. Aus den drei Impulsen der Empfänger 5 sind drei Winkel bestimmbar. Aufgrund bekannter trigonometrischer Formeln lässt sich nunmehr der Abstand und der Winkel der Fläche durch die Auswerteschaltung 6 berechnen.

Die Erfindung ist nicht auf die Verwendung von Laserstrahlen beschränkt. Die Abtastung des bestimmten Bereiches kann ebenso mittels Lichtstrahlen, Wärmestrahlen oder Mikrowellen erfolgen. Die Empfänger und die Sender sind je nach dem speziellen Anwendungsfall auszuwählen.

**Patentansprüche**

1. Strahlablenksystem für elektromagnetische Strahlung, mit zwei um jeweils eine Rotationsachse taumelnden ebenen Spiegeln mit gleichen Taumelwinkeln, dadurch gekennzeichnet, dass jeder Spiegel (21, 22) von einem Motor (10, 12) angetrieben ist, wobei das Drehzahlverhältnis ($N_1$, $N_2$) gleich dem Verhältnis zweier teilerfremder ganzer Zahlen ist.

2. Strahlablenksystem nach Anspruch 1, dadurch gekennzeichnet, dass die die Spiegelflächen (21, 22) tragenden Körper als zur jeweiligen Rotationsachse koaxiale Zylinder (11, 13) ausgebildet sind, bei denen die den zugeordneten Motoren (10, 12) abgewandten Stirnseiten in einer Ebene schräg zur Zylinderachse (11, 13) liegen.

3. Strahlablenksystem nach Anspruch 1 oder 2, dadurch gekennzeichnet, dass die Spiegel (21, 22) so angeordnet sind, dass die Strahlen im spitzen Winkel, möglichst senkrecht, auf die Spiegel (21, 22) auftreffen.

4. Strahlablenksystem nach einem der vorhergehenden Ansprüche, dadurch gekennzeichnet, dass jeder Motor (10, 12) mit dem aufgesetzten Zylinder (11, 13) dynamisch ausgewuchtet ist.

5. Strahlablenksystem nach einem der vorhergehenden Ansprüche, dadurch gekennzeichnet, dass als Strahlungs-Sender (1) ein Laser dient.

6. Strahlablenksystem nach einem der vorhergehenden Ansprüche, dadurch gekennzeichnet, dass zwischen Strahlungs-Sender (1) und Strahlenablenksystem (3) ein halbdurchlässiger Spiegel (2) angeordnet ist und dass im weiteren Strahlenweg ein Strahlungs-Empfänger (5) angeordnet ist.

7. Strahlablenksystem nach einem der Ansprüche 1 bis 5, dadurch gekennzeichnet, dass am Ausgang des Ablenksystems (3) ein Strahlungs-Empfänger (5) angeordnet ist.

8. Strahlablenksystem nach Anspruch 6 oder 7, dadurch gekennzeichnet, dass durch das Signal des Empfängers (5) Zählvorrichtungen (50, 51) abfragbar sind, die Informationen über die augenblickliche Drehstellung der Motoren enthalten.

9. Strahlablenksystem nach einem der vorhergehenden Ansprüche, dadurch gekennzeichnet, dass die Motoren (10, 12) des Systems von einem gemeinsamen Taktgenerator (30) mit nachgeschalteten Teilern (32, 33) gesteuert sind.

10. Strahlablenksystem nach einem der vorhergehenden Ansprüche, dadurch gekennzeichnet, dass zwischen dem ersten Spiegel (21) und dem zweiten Spiegel (22) Sammellinsen (60, 61) angeordnet sind.

11. Verwendung des Strahlablenksystems nach einem der vorhergehenden Ansprüche zur Verfolgung eines elektromagnetische Strahlung aussendenden Objektes, dadurch gekennzeichnet, dass das Strahlablenksystem (3) als Ganzes mittels Motoren (68) räumlich verschwenkbar ist und dass die Verschwenkung in Abhängigkeit von der detektierten Lage des Objekts erfolgt.

12. Verwendung des Strahlablenksystems nach einem der Ansprüche 1 bis 10 zur Bestimmung der Position eines elektromagnetische Strahlung aussendenden Objektes, dadurch gekennzeichnet, dass drei Empfänger (5) vorgesehen sind, deren Lage zueinander und zum Strahlablenksystem bekannt ist, und dass eine Auswerteschaltung (6) zur Bestimmung von Abstand und Richtung des Objektes aus den Empfängersignalen vorgesehen ist.

13. Verwendung des Strahlablenksystems nach einem der Ansprüche 1 bis 10 zur Vermessung von Spur und Sturz eines Fahrzeuges.

14. Verwendung des Strahlablenksystems nach einem der Ansprüche 1 bis 10, gekennzeichnet durch zwei Strahlablenksysteme im festen, bekannten Abstand mit jeweils nachgeschalteten Empfängern, zur Bestimmung von Abstand und Richtung eines elektromagnetische Strahlung aussendenden Objekts.

**Claims**

1. Beam deflection system for electromagnetic radiation, having two plane mirrors wobbling about respective axes of rotation, with equal wobble angles, characterized in that each mirror (21, 22) is driven by a motor (10, 12), the speed-of-rotation ratio ($N_1$, $N_2$) being equal to the ratio of two coprime integers.

2. Beam deflection system according to Claim 1, characterized in that the bodies carrying the mirror surfaces (21, 22) are designed as cylinders (11, 13), which are coaxial with the respective axis of rotation and in the case of which the end faces remote from the associated motors (10, 12) are situated in a plane inclined to the cylinder axis (11, 13).

3. Beam deflection system according to Claim 1 or 2, characterized in that the mirrors (21, 22) are disposed so that the beams impinge on the mirrors (21, 22) at an acute angle, if possible normally.

4. Beam deflection system according to one of the preceding claims, characterized in that each motor (10, 12) is dynamically balanced with the cylinder (11, 13) fitted thereto.

5. Beam deflection system according to one of the preceding claims, characterized in that a laser is employed as radiation emitter (1).

6. Beam deflection system according to one of the preceding claims, characterized in that a semitransmitting mirror (2) is disposed between radiation emitter (1) and beam deflection system (3), and in that a radiation receiver (5) is disposed in the further beam path.

7. Beam deflection system according to one of claims 1 to 5, characterized in that a radiation receiver (5) is disposed at the output of the deflection system (3).

8. Beam deflection system according to Claim 6 or 7, characterized in that counting devices (50, 51), which contain information on the instantaneous rotary setting of the motors, can be interrogated by the signal of the receiver (5).

9. Beam deflection system according to one of the preceding claims, characterized in that the motors (10, 12) of the system are controlled by a common clock generator (30) with dividers (32, 33) connected downstream.

10. Beam deflection system according to one of the preceding claims, characterized in that collecting lenses (60, 61) are disposed between the first mirror (21) and the second mirror (22).

11. Use of the beam deflection system according to one of the preceding claims for tracking an object emitting electromagnetic radiation, characterized in that the beam deflection system (3), as a whole, is pivotable in space by means of motors (68), and in that the pivoting takes place as a function of the detected position of the object.

12. Use of the beam deflection system according to one of Claims 1 to 10 for the determination of the position of an object emitting electromagnetic radiation, characterized in that three receivers (5) are provided, the position of which relative to one another and relative to the beam deflection system is known, and in that an evaluation circuit (6) is provided for the determination of distance and direction of the object from the receiver signals.

13. Use of the beam deflection system according to one of Claims 1 to 10 for the measurement of the tracking and camber of a vehicle.

14. Use of the beam deflection system according to one of Claims 1 to 10, characterized by two beam deflection systems at a fixed, known distance with respective receivers connected downstream, for the determination of distance and direction of an object emitting electromagnetic radiation.

**Revendications**

1. Système de balayage électromagnétique comportant deux miroirs plans effectuant des mouvements de nutation autour de deux axes de rotation respectifs et suivant des angles de nutation égaux, système caractérisé en ce que chaque miroir (21, 22) est entraîné par un moteur (10, 12) et le rapport des vitesses de rotation ($N_1$, $N_2$) est égal au rapport de deux nombres entiers premiers entre-eux.

2. Système de balayage électromagnétique selon la revendication 1, caractérisé en ce que les corps qui portent les surfaces de miroir (21, 22) sont en forme de cylindres coaxiaux (11, 13) symétriques en rotation et les surfaces frontales de ceux-ci, associées au moteur (10, 12), sont situées dans un plan incliné par rapport à l'axe des cylindres (11, 13).

3. Système de balayage électromagnétique selon l'une quelconque des revendications 1 et 2, caractérisé en ce que les miroirs (21, 22) sont montés de façon que les rayons arrivent sur les miroirs (21, 22) suivant un angle aigu de préférence perpendiculairement aux miroirs.

4. Système de balayage électromagnétique selon l'une quelconque des revendications précédentes, caractérisé en ce que chaque moteur (10, 12) et le cylindre (11, 13) qu'il porte, sont équilibrés de manière dynamique.

5. Système de balayage électromagnétique selon l'une quelconque des revendications précédentes, caractérisé en ce que l'émetteur de rayonnement (1) est un laser.

6. Système de balayage électromagnétique selon l'une quelconque des revendications précédentes, caractérisé par un miroir semi-transparent (2) prévu entre l'émetteur de rayonnement (1) et le système de balayage (3) et un récepteur de rayonnement (5) dans l'autre chemin du rayonnement.

7. Système de balayage électromagnétique selon l'une quelconque des revendications 1 à 5, caractérisé par un récepteur de rayonnement (5) à la sortie du système de balayage (3).

8. Système de balayage électromagnétique selon l'une quelconque des revendications 6 et 7, caractérisé par des dispositifs de comptage (50, 51) qui peuvent être interrogés par le signal de récepteur (5) et qui reçoivent les informations relatives à la position angulaire instantanée des moteurs.

9. Système de balayage électromagnétique selon l'une quelconque des revendications précédentes, caractérisé en ce que les moteurs (10, 12) du système sont commandés par un générateur d'horloge (30) commun suivi par des diviseurs (32, 33).

10. Système de balayage électromagnétique selon l'une quelconque des revendications précédentes, caractérisé par des lentilles collectrices (60, 61) entre le premier miroir (21) et le second miroir (22).

11. Application du système de balayage électromagnétique selon l'une quelconque des revendications précédentes, pour la poursuite d'un objet émettant un rayonnement électromagnétique, caractérisée en ce que le système de balayage (3) est susceptible de basculer globalement dans l'espace grâce à des moteurs (68) et le basculement se fait en fonction de la position détectée de l'objet.

12. Application du système de balayage électromagnétique selon l'une quelconque des revendications 1 à 10 pour déterminer la position d'un objet émettant un rayonnement électromagnétique, caractérisée par trois récepteurs (5) dont la position respective et la position par rapport au système de balayage sont connues et par un circuit d'exploitation (6) pour déterminer la distance et la direction de l'objet à partir des signaux de réception.

13. Application du système de balayage électromagnétique selon l'une quelconque des revendications 1 à 10 pour mesurer la trace et le carrossage des roues d'un véhicule.

14. Application du système de balayage électromagnétique selon l'une quelconque des revendications 1 à 10, caractérisée par deux systèmes de balayage à distance fixe connue et comportant des récepteurs en amont pour déterminer la distance et la direction d'un objet émettant un rayonnement électromagnétique.

FIG.1

FIG.2

FIG.3

FIG.4

FIG.5

FIG.6

FIG.7

FIG.10

FIG.8

0 120 329

FIG.9

FIG.12

FIG.11